# EUROPÄISCHE PATENTSCHRIFT

(11) **EP 2 844 379 B1**
(45) Veröffentlichungstag und Bekanntmachung des Hinweises auf die Patenterteilung: **03.05.2017**
(21) Anmeldenummer: 13717425.6
(22) Anmeldetag: 06.03.2013
(51) Int. Cl.: B01F 5/06, C02F 1/32

(54) **UV-WASSERBEHANDLUNGSANLAGEN MIT MISCHVORRICHTUNG**
UV WATER TREATMENT PLANTS WITH MIXING DEVICE
NSTALLATIONS DE TRAITEMENT DE L'EAU PAR UV AVEC UN DISPOSITIF DE MÉLANGE

(30) Priorität: 04.05.2012 DE 102012008732
(43) Veröffentlichungstag der Anmeldung: 11.03.2015
(73) Patentinhaber: Xylem Water Solutions Herford GmbH, 32051 Herford (DE)
(72) Erfinder: MORNINGSTAR, Leroy, Jack, Jr., Charlotte, NC 28273 (US); KÄMMERER, Sven, 32107 Bad Salzuflen (DE)
(74) Vertreter: Lenzing Gerber Stute
(86) Internationale Anmeldenummer: PCT/EP2013/000653
(87) Internationale Veröffentlichungsnummer: WO 2013/164048

(56) Entgegenhaltungen:
- EP-B1- 0 893 411
- WO-A2-00/67887
- JP-A- 2001 212 214
- US-A1- 2010 193 421

## Beschreibung

Die vorliegende Erfindung betrifft eine UV-Wasserbehandlungsanlage mit den Merkmalen des Oberbegriffs des Anspruchs 1.

Es ist seit Langem bekannt, dass UV-Strahlung keimtötend wirkt und das bereits die natürlich auftretende UV-Strahlung im Sonnenlicht bei ausreichender Intensität und Dauer eine desinfizierende Wirkung hat. Für die Desinfektion von Wasser und Abwasser wird UV-Strahlung in kleinen und großen Anlagen eingesetzt. Dabei kann eine Unterscheidung getroffen werden zwischen Anlagen, bei denen UV-Strahler in geschlossenen Kanälen angeordnet sind und solchen Anlagen, bei den die UV-Strahler in oben offenen Kanälen, sogenannten Gerinnen, angeordnet sind. Die zweite Bauart mit offenem Gerinne wir vorwiegend in der Abwassertechnik eingesetzt. Das geklärte Abwasser wird dabei durch einen offenen Kanal zu der UV-Anlage geleitet und dort mit UV-Strahlung beaufschlagt, um die Keimzahl so weit zu reduzieren, dass das geklärte Abwasser beispielsweise in Gewässer eingeleitet werden kann. Die Desinfektionsleistung kann dabei so hoch sein, dass die Einleitung in Badegewässer zulässig ist.

Abwasserbehandlungsanlagen sind normalerweise so aufgebaut, dass das Wasser allein auf Grund der Schwerkraft von einem Zulauf durch die verschiedenen Behandlungsstufen zu einem Auslauf strömt, ohne dass Pumpen erforderlich sind. Deshalb wird auch bei UV-Behandlungsanlagen in der Abwassertechnik angestrebt, den Strömungswiderstand möglichst gering zu halten, um bei der vorgesehenen Durchflussrate einen ebenfalls geringen Druckverlust zu erzielen. Ein solcher Druckverlust wird sich im Betrieb der Anlage in einer Höhendifferenz zwischen dem Wasserspiegel im Zulauf und dem Wasserspiegel im Ablauf ausdrücken. Man ist bestrebt, diese Höhendifferenz möglichst gering zu halten.

Andererseits soll die Desinfektionsleistung der Anlage sicher gestellt sein, wobei sich der Wirkungsgrad der Anlage in dem Verhältnis zwischen Desinfektionsleistung und eingesetzter elektrischer Leistung ausdrückt. Aus ökonomischen Gründen soll dieser Wirkungsgrad optimiert werden. Aus diesem Grund werden UV-Strahler, die im Wesentlichen langgestreckte Gasentladungslampen sind, in den Kanal eingesetzt, und zwar vorzugsweise in Reihen quer zu der Strömung. Mehrere Reihen sind hintereinander angeordnet und so gegeneinander versetzt, dass die Strahler einer Reihe mittig zwischen den Strahlern der stromaufwärts angeordneten Reihe vorgesehen sind. Das zwischen den ersten Strahlern hindurch strömende Wasser trifft dann zentral auf den nachfolgenden Strahler, der mittig hinter der Lücke steht. Bei dieser Anordnung ergeben sich unterschiedliche Abstände zwischen den Strahlern der verschiedenen Reihen und der seitlich begrenzenden Kanalwand. In Bereiche, die einen größeren Abstand zwischen dem Strahler und der Kanalwand aufweisen, ist die Strahlungsdosis geringer als in den übrigen Bereichen. Dieser Effekt soll kompensiert werden, damit jeder in der Praxis auftretende Strömungspfad eine ausreichende und möglichst gleiche UV-Dosis erhält.

Aus dem Stand der Technik sind hierfür verschiedene Lösungen bekannt. Im Wesentlichen beruhen die bekannten Lösungen darauf, dass an der Wandung des Kanals durchgehende balkenförmige Elemente mit unterschiedlichen Querschnitten angeordnet werden, die den Abstand zwischen dem benachbarten UV-Strahler und der Kanalwandung reduzieren, den dort entstehenden Spalt also einengen. Weiterhin ist bekannt einen Kanal mit vier Reihen von je vier UV-Strahlern zu versehen, die in Strömungsrichtung hintereinander angeordnet sind und die quer zu Ihrer Längsachse angeströmt werden. Die Strahler hängen in dem offenen Gerinne also senkrecht. Neben dem Strahler, der von der Wandung jeweils den größten Abstand aufweist, ist eine im Querschnitt dreieckige Rippe angeordnet, die hier den freien durchströmbaren Querschnitt des Spaltes, der sich zwischen der Wandung und dem Strahler ergibt, einengt. Die Druckschrift WO 2008055344 A1 zeigt verschiedene Lösungen, die ebenfalls mit im Querschnitt dreieckigen Rippen arbeiten, wobei die Rippen zum Einen den freien Querschnitt einengen und zum Anderen die Strömung ablenken.

Die Druckschrift EP 0893411 B1 zeigt eine Lösung, bei der ein L-förmiges Profil seitlich an der Wandung des Kanals angeordnet ist, und zwar auch hier bei hintereinander versetzt angeordneten Reihen von UV-Strahlern jeweils dort, wo der randseitige UV-Strahler den größten Abstand zur Kanalwandung aufweist. Das L-Profil wird dabei durchgehend über die gesamte Länge des benachbarten Strahlers an der Wandung angebracht. Es lenkt den Wasserstrom in diesem Bereich im Wesentlichen vollständig ab. Ziel ist es hier, die Strömung des Wassers im Randbereich vollständig auf den von der Wandung beabstandet angeordneten Strahler umzulenken.

Das Dokument US-A-20100193421 beschreibt eine UV-Wasserbehandlungsanlage gemäß dem Oberbegriff des Anspruchs 1

Die beschriebenen technischen Lösungen sollen also die Strömungspfade des durch den Kanal strömenden Wassers oder Abwassers so beeinflussen, dass sie in den Bereich höherer Strahlungsintensität auch dort gelangen, wo der Strahler einen größeren Abstand von der benachbarten Kanalwandung aufweist. Hierbei ergeben sich in der Praxis zwei Probleme. Einerseits wird durch die vollständige Ablenkung der Strömungspfade durch die Einbauten, die sich mit gleichförmigen Querschnitt über die gesamte Länge des benachbarten Strahlers entlang der Kanalwandung erstrecken, der freie Querschnitt des Kanals deutlich eingeengt, so dass der Druckverlust zwischen der stromaufwärtigen Seite und der stromabwärtigen Seite der Kanalanlage steigt. Andererseits wird im Bereich dieser Einbauten die Strömung beschleunigt, so dass die Strömungspfade zwar in den Bereich höherer Intensität umgelenkt werden, jedoch dort eine geringere Verweildauer aufweisen. Das angestrebte Ziel, die dem Strömungspfad zugeführte UV-Dosis zu erhöhen, wird auf diese Weise nicht optimal erreicht.

Es ist deshalb Aufgabe der vorliegenden Erfindung, eine Vorrichtung zur Beeinflussung der Strömung in einer UV-Wasserbehandlungsanlage zu schaffen, die die Bestrahlung von randseitigen Strömungspfaden bei Anlagen mit Reihen von UV-Strahlern, die gegeneinander versetzt angeordnet sind, zu optimieren. Weiter ist es Aufgabe der vorliegenden Erfindung, eine UV-Wasserbehandlungsanlage zu schaffen, bei der eine UV-Desinfektion mit besonders gutem Wirkungsgrad erzielt wird und bei der gleichzeitig der Druckverlust zwischen der stromaufwärtigen Seite und der stromabwärtigen Seite möglichst gering ist.

Diese Aufgabe wird von einer Anlage mit Merkmalen des Anspruchs 1 gelöst. Weil die Anlage eine Mischvorrichtung mit einer Vielzahl von Vorsprüngen aufweist, die an einer Seitenwand parallel zu einem Strahler derart angeordnet ist, dass die Vorsprünge im Betrieb in den freien Querschnitt des Kanals hineinreichen und zwischen jeweils zwei Vorsprüngen jeweils in Strömungsrichtung gesehen eine Ausnehmung vorgesehen ist, die einen freien durchströmbaren Querschnitt darstellt, kann der auftreffende Strom an allen Seiten um die Vorsprünge herum treten, so dass eine wirksame Verwirbelung und damit eine Neuverteilung der Partikel hinter den Ausnehmungen erzielt wird, ohne dass die Strömungsgeschwindigkeit in nachteiligem Maß erhöht wird und gleichzeitig wird durch die Mischvorrichtung nur eine geringe Erhöhung des Strömungswiderstandes verursacht, die im Betrieb vernachlässigbar ist und die insbesondere keinen erheblichen Druckverlust zwischen der stromaufwärtigen Seite und der stromabwärtigen Seite der Anlage bewirkt.

Eine besonders gute Mischung des randseitig in dem Kanal strömenden Wassers bei geringem Druckverlust ergibt sich, wenn das Flächenverhältnis der in Strömungsrichtung wirksamen Flächen der Vorsprünge zu den entsprechenden Flächen der Ausnehmungen kleiner oder gleich 1 ist.

Weil bei der erfindungsgemäßen UV-Wasserbehandlungsanlage in Strömungsrichtung gesehen vor oder unmittelbar neben den UV-Strahlern, die um einen Abstand gegenüber der Kanalwandung versetzt sind, eine Mischvorrichtung mit Vorsprüngen und Ausnehmungen vorgesehen ist, wobei die Mischvorrichtung sich im Wesentlichen parallel zu der Längsachse des UV-Strahlers erstreckt, wird unmittelbar neben dem benachbarten Strahler eine Mischung der Strömungspfade erzeugt, die für eine Verteilung der in diesem Strömungspfaden enthaltenen pathogenen Keime sorgt. Keime, die in einem Strömungspfad nahe der Kanalwandung befördert werden, werden dadurch näher an die UV-Strahler geleitet. Wesentlich ist hier, dass die Strömungsgeschwindigkeit sich in der Summe kaum erhöht und dass nur ein geringer Druckverlust erzeugt wird. Die gegenüber dem Stand der Technik verringerte Strömungsgeschwindigkeit bewirkt eine höhere UV-Dosis für die dort befindlichen pathogenen Keime, denn die UV-Dosis, die für die Desinfektion entscheidend ist, ist im Wesentlichen das Produkt aus Intensität und Verweildauer. Die Verweildauer steigt mit sinkender Strömungsgeschwindigkeit.

Vorzugsweise sind die Vorsprünge einstückig mit dem Grundkörper ausgebildet, beispielsweise aus einem Stück Edelstahlblech.

Weiter ist vorteilhaft, wenn die Vorsprünge und die Ausnehmungen in einer geraden Linie nebeneinander angeordnet sind. Diese Ausführung ist besonders einfach zu fertigen, beispielsweise durch Stanzen und Biegen.

Weiter ist es für einen geringen Strömungswiderstand vorteilhaft, wenn in einer Projektion in Strömungsrichtung des zu behandelnden Wassers die Summe der Flächen der Vorsprünge kleiner oder gleich der Summe der Flächen der Ausnehmungen ist. Insbesondere können alle Vorsprünge gleich groß und die Fläche jeweils eines Vorsprungs kleiner oder gleich der Fläche einer benachbarten Ausnehmung sein.

Ein einfaches Bauteil ergibt sich, wenn die Vorsprünge eine Dicke aufweisen, die gleich der Dicke des Grundkörpers ist.

Eine besonders gute Funktion, nämlich eine gute Durchmischung bei geringem Strömungswiderstand, ergibt sich, wenn die Vorsprünge jeweils durch Seitenkanten und eine Stirnkante begrenzt sind, wobei die Länge einer Seitenkante zwischen 2 mm und 45 mm, vorzugsweise zwischen 20 mm und 30 mm, und insbesondere 25 mm beträgt. Die Länge der Stirnkante beträgt zwischen 2 mm und 100 mm, vorzugsweise zwischen 25 mm und 50 mm, und insbesondere 40 mm.

Vorzugsweise ist die wenigstens eine Mischvorrichtung in Strömungsrichtung gesehen stromaufwärts vor oder unmittelbar neben dem benachbarten UV-Strahlern angeordnet.

Nachfolgend wird ein Ausführungsbeispiel der vorliegenden Erfindung anhand der Zeichnung beschrieben. Es zeigen:
- Figur 1:: Eine Mischvorrichtung mit rechteckigen Vorsprüngen in einer perspektivischen Darstellung;
- Figur2:: Eine UV-Wasserbehandlungsanlage mit einem offenen Gerinne und darin eingebauten Mischvorrichtungen gemäß Figur 1; sowie
- Figur 3:: Die Wasserbehandlungsanlage aus Figur 2 in einem horizontalen Schnitt mit simulierten Strömungspfaden.

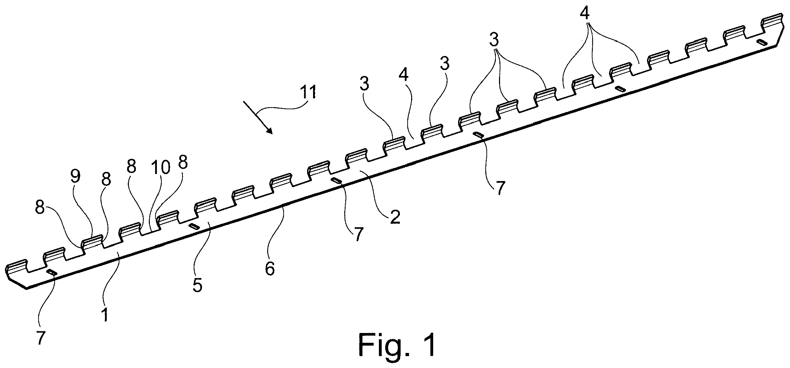

Die Figur 1 zeigt eine erfindungsgemäße Mischvorrichtung in einer perspektivischen Darstellung. Eine Mischvorrichtung 1 weist einen langgestreckten, plattenförmigen Grundkörper 2 und von diesem Grundkörper ausgehende Vorsprünge 3 auf. Die Vorsprünge 3 sind voneinander beabstandet durch dazwischen liegende Ausnehmungen 4.

Im Einzelnen ist der Grundkörper 3 als Metallstreifen ausgebildet. Er weist eine Oberseite 5 und eine in der Figur 1 nicht sichtbare Unterseite 6 auf. Der Grundkörper 2 ist von insgesamt sechs Langlöchern 7 durchsetzt, die zur Befestigung der Mischvorrichtung 1 an einer Wandung eines Kanals einer Wasserbehandlungsvorrichtung dienen. Die Vorsprünge 3 schließen einstückig an den Grundkörper 2 an und sind gegenüber der Ebene der Oberseite 5 nach oben abgewinkelt. Die Vorsprünge 3 weisen Seitenkanten 8 und eine Stirnkante 9 auf. Die Seitenkanten 8 verlaufen parallel zueinander, während die Stirnkante 9 etwa rechtwinklig zu den Seitenkanten 8 verläuft und diese miteinander verbindet. Es entsteht ein im Wesentlichen rechteckiger Vorsprung 3.

Die Ausnehmungen 4 sind zwischen den Vorsprüngen 3 angeordnet. Sie werden von den Seitenkanten 8 der Vorsprünge 3 begrenzt. Eine Unterkante 10 begrenzt die Ausnehmung 4 zu dem Grundkörper 2 hin. Insgesamt ergibt sich über die Länge des langgestreckten Grundkörpers 2 eine regelmäßige Abfolge von Vorsprüngen 3 und Ausnehmungen 4, wobei die Vorsprünge 3 zinnenartig über die Oberseite 5 des Grundkörpers 2 hinausragen.

In der Praxis wird die Mischvorrichtung aus einem Metallstreifen gefertigt, dessen Breite der Breite des Grundkörpers 2 zuzüglich der Länge einer Seitenkante 8 entspricht. Die Ausnehmungen 4 werden dann in diesen Blechstreifen eingeschnitten, um zwischen den Ausnehmungen die Vorsprünge 3 zu bilden. Sodann werden die so erzeugten Vorsprünge 3 in der in Figur 1 ersichtlichen Weise etwa rechtwinklig nach oben aus der Ebene der Oberseite 5 herausgebogen.

Im Bereich der Ausnehmungen 4 ist der Grundkörper 2 vollkommen plan, so dass zwischen zwei benachbarten Vorsprüngen 3 kein Material über die Oberseite 5 des Grundkörpers 2 hinaus nach oben ragt. Bei dieser Ausführungsform, bei der die Seitenkanten 8 rechtwinklig zu den Stirnkanten 9 und der Unterkante 10 orientiert sind, ist bestimmt durch das Längenverhältnis der Stirnkante 9 zu der Unterkante 10. Sind die Längen der Stirnkante 9 und der Unterkante 10 gleich, so ist das Flächenverhältnis zwischen den Vorsprüngen 3 und den Ausnehmungen 4 1:1. Da die Mischvorrichtung gemäß Figur 1 im Betrieb mit der Unterseite 6 auf eine Wandung eines Kanals aufgesetzt wird und in Richtung eines Strömungspfeiles 11 angeströmt wird, bestimmt dieses Verhältnis auch den Strömungswiderstand. Für einen möglichst geringen Strömungswiderstand ist vorteilhaft, wenn die Flächen der Vorsprünge 3<oder= den Flächen der Ausnehmungen 4 sind, also bei rechteckigen Vorsprüngen 3 und Ausnehmungen 4 die Länge der Stirnkanten 9 kleiner oder gleich der Länge der Unterkante 10 ist.

Die Länge der Seitenkanten 8 bestimmt das Maß, um das die Vorsprünge 9 in den Wasserstrom hineinragen und diesen verwirbeln. Es wird derzeit bevorzugt, wenn die Seitenkanten 8 eine Länge von 45 mm nicht überschreiten, vorzugsweise eine Länge von 20 bis 25 mm aufweisen.

Es sind auch andere Konfigurationen der Mischvorrichtung denkbar, die von der rechteckigen, zementförmigen Gestaltung der Figur 1 abweichen. So können die Vorsprünge in einer nicht dargestellten Ausführungsform auch trapezförmig oder dreieckig sein. Die Ausnehmungen zwischen den Vorsprüngen erhalten dann die dazu komplementäre Form. Wieder ist wichtig, dass das Flächenverhältnis zwischen den Vorsprüngen und den Ausnehmungen unabhängig von der geometrischen Gestaltung kleiner oder gleich 1 ist.

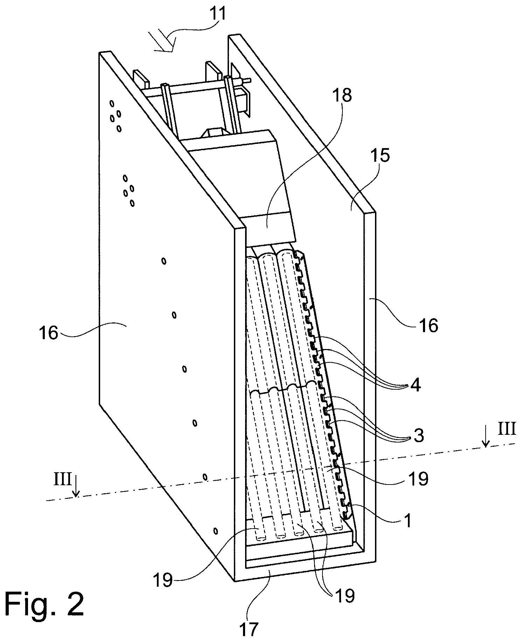

In der Figur 2 ist eine UV-Wasserbehandlungsanlage in einer perspektivischen Ansicht dargestellt.

Die Anlage weist einen nach oben offenen Kanal 15 mit Seitenwänden 16 und einer Bodenwand 17 auf. In dem Kanal 15, der im Betrieb von Abwasser durchströmt wird, ist eine Strahleranordnung 18 vorgesehen, die eine Anzahl von UV-Strahlern 19 umfasst. Die Strahler 19 sind von der Bauart her bekannt. Es handelt sich um sogenannte UV-Quecksilberniederdruckstrahler. Die Anlage wird in der Figur 2 von hinten nach vorne in Richtung des Strömungspfeils 11 durchströmt.

Für eine hohe Strahlungsintensität sind mehrere Strahler 19 in der Anlage vorgesehen. Im Einzelnen umfasst die Vorrichtung aus Figur 2 insgesamt 24 Strahler 19. Die Strahler sind in Reihen zu je sechs Strahlern quer zur Strömungsrichtung 11 ausgerichtet. Insgesamt vier Reihen mit sechs Strahlern sind in Strömungsrichtung 11 hintereinander vorgesehen. In der Figur 2 ist also die in Strömungsrichtung letzte der vier Reihen sichtbar. Von den insgesamt sechs Strahlern 19 dieser letzten Reihe sind nur fünf sichtbar, da in Figur 2 der äußerste linke Strahler durch die perspektivische Ansicht von der Seitenwand 16 verdeckt ist.

Der in Figur 2 rechte Strahler 19 weist einen relativ großen Abstand von der benachbarten Seitenwand 16 auf. In diesem Abstand ist die Mischvorrichtung 1, wie sie zuvor mit Bezug auf die Figur 1 beschrieben wurde, angeordnet.

Die Mischvorrichtung 1 ist parallel zu der Längsachse der Strahler 19 an der Innenseite der Seitenwand 16 befestigt und zwar mit der Unterseite 6 an der Seitenwand 16 anliegend. Die Oberseite 5 weist auf den Strahler 19 zu. Ebenso weisen die Vorsprünge 3 senkrecht von der Seitenwand 16 weg in Richtung auf die Strahler. Die Vorsprünge 3 stehen also in den Innenraum des Kanals 15 hinein.

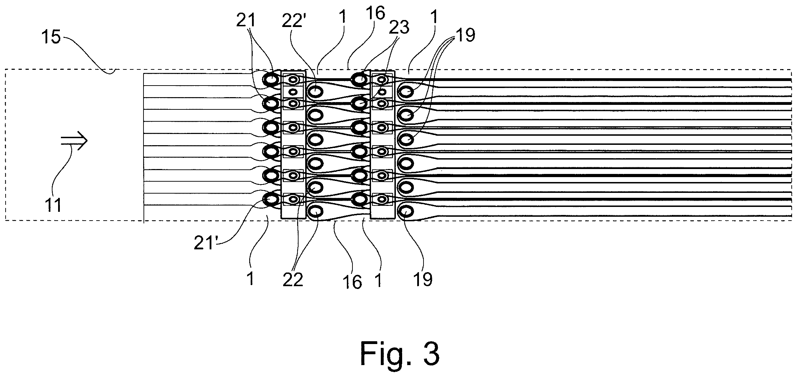

Die UV-Wasserbehandlungsanlage aus Figur 2 zeigt eine Konfiguration von UV-Strahlern 19, bei der die einzelnen Strahler in einem Winkel gegen die Strömungsrichtung geneigt sind. Die Mischvorrichtung 1 ist in eben diesen Winkel an der Seitenwand 16 befestigt. Der genauere Aufbau der UV-Wasserbehandlungsvorrichtung wird nachfolgend mit Bezug auf die Figur 3 näher beschrieben, die einen horizontalen Längsschnitt entlang der Linie III-III aus Figur 2 veranschaulicht.

Die Figur 3 zeigt eine Draufsicht auf den horizontalen Längsschnitt entlang der Linie III-III aus Figur 2. Der Kanal 15 mit den Seitenwänden 16 ist hier als Begrenzung des Strömungspfades dargestellt, in dem das Wasser in der Strömungsrichtung 11 durch die Wasserbehandlungsanlage strömt. In Strömungsrichtung 11 sind 4 Reihen mit je sechs UV-Strahlern angeordnet. Die stromaufwärtige Reihe umfasst sechs Strahler 21, die zweite Reihe umfasst sechs Strahler 22, die in Strömungsrichtung dritte Reihe umfasst sechs Strahler 23 und die letzte Reihe umfasst die bereits in Figur 2 beschriebenen Strahler 19.

Die Strahler 21 sind nicht gleichmäßig über die Breite des Kanals 15 verteilt. Vielmehr weisen die sechs Strahler 21 dieser Reihe einen gleichmäßigen Abstand voneinander auf, sind jedoch bezüglich der Strömungsrichtung 11 nach links, in der Figur 3 also nach oben versetzt, so dass der in Strömungsrichtung betrachtete linke Strahler 21, der in der Figur 3 oben ist, näher an der Seitenwand 16 montiert ist als der in Strömungsrichtung rechte Strahler 21', der in der Figur 3 unten dargestellt ist. Zwischen dem in Strömungsrichtung rechten Strahler 21' und der Seitenwand 16 ergibt sich folglich eine Lücke, in der die Mischvorrichtung 1 angeordnet ist.

Die zweite Reihe mit Strahlern 22 ist ähnlich aufgebaut. Die Strahler 22 weisen untereinander einen gleichmäßigen Abstand auf. Jedoch sind die Strahler in Strömungsrichtung betrachtet nach rechts versetzt, so dass der rechte Strahler 22, der in Figur 3 unten dargestellt ist, näher an der Seitenwand 16 des Kanals 15 angeordnet ist als der in Strömungsrichtung linke Strahler 22', der in Figur 3 oben angeordnet ist.

Entsprechend ergibt sich zwischen dem in Figur 3 oberen Strahler 22' und der Seitenwand 16 des Kanals 15 eine Lücke, in der wiederum eine Mischvorrichtung 1 angeordnet ist.

Der beschriebene Versatz der Reihen von Strahlern 21 einerseits und Strahlern 22 andererseits ergibt eine Ausrichtung der beiden Reihen zueinander, in der jeweils ein Strahler 22 mittig hinter der Lücke angeordnet ist, die sich zwischen 2 stromaufwärts gelegenen Strahlern 21 ergibt. Auf diese Weise wird eine besonders sichere Desinfektionsanordnung geschaffen. Zwischen den Strahlern 21 hindurch tretende Partikel treffen nahezu mittig auf die Strahler 22. Wenn diese Partikel beim Durchgang zwischen den Strahlern 21 eine relativ geringe UV-Dosis empfangen haben, so erhalten sie zwangsläufig eine um so höhere Strahlungsdosis beim Passieren des nachfolgenden Strahlers 22. Die Mischvorrichtungen 1 verbessern durch Verwirbelung die Desinfektion in der Lücke zwischen einem Strahler und der Seitenwand 16, da sich hier wandungsnahen keine Strömungspfade ausbilden können, in denen die Partikel nur eine geringe UV-Intensität erfahren. Außerdem bewirken die Mischvorrichtungen keine nennenswerte Ablenkung der Strömungspfade der Wasserströmung in Strömungsrichtung 11, so dass keine störende Beschleunigung der Strömung in diesen Bereich eintritt, die zu einer verringerten UV-Dosis führen würde.

Die Anordnung der Strahler 23 und 19 ist entsprechend derjenigen der Strahler 21 und 22. Die Strahler 23 sind gegenüber der Strömungsrichtung nach links versetzt, die Strahler 19 nach rechts. In der sich jeweils ergebenden Lücke sind an den Seitenwänden 16 zwei Mischvorrichtungen 1 montiert, jeweils eine Mischvorrichtung für jede Strahlerreihe.

## Patentansprüche

1. UV-Wasserbehandlungsanlage mit einem oben offenen Kanal (15) und einer Anzahl von in dem Kanal (15) angeordneten langgestreckten und rohrförmigen UV-Strahlern (19, 20, 21, 22), wobei der Kanal zwei Seitenwände (16) und eine Bodenwand (17) aufweist, und wobei die UV-Strahler parallel zu den Seitenwänden (16) und nicht parallel zu der Bodenwand (17) ausgerichtet sind, **dadurch gekennzeichnet, dass** wenigstens eine Mischvorrichtung (1) mit einer Vielzahl von Vorsprüngen (3) an einer Seitenwand parallel zu einem Strahler (19, 20, 21, 22) derart befestigt ist, dass die Vorsprünge (3) im Betrieb in den freien Querschnitt des Kanals hineinreichen und dass zwischen jeweils zwei Vorsprüngen (3) jeweils in Strömungsrichtung (11) gesehen eine Ausnehmung (4) vorgesehen ist, die einen freien durchströmbaren Querschnitt darstellt.

2. UV-Wasserbehandlungsanlage nach Anspruch 1, **dadurch gekennzeichnet, dass** die Vielzahl von Vorsprüngen (3) von einem Grundkörper (2) der wenigstens einen Mischvorrichtung (1) ausgehen, und die Vielzahl von Vorsprüngen (3) von der Unterseite (6) weg weisen und sich über eine von der Oberseite (5) gebildete Ebene hinaus erstrecken.

3. UV-Wasserbehandlungsanlage nach Anspruch 1 oder 2, **dadurch gekennzeichnet, dass** das Flächenverhältnis der in Strömungsrichtung (11) wirksamen Flächen zwischen den Vorsprüngen (3) und den Ausnehmungen (4) kleiner oder gleich 1 ist.

4. UV-Wasserbehandlungsanlage nach einem der vorhergehenden Ansprüche, **dadurch gekennzeichnet, dass** die Vorsprünge (3) und die Ausnehmungen (4) in einer geraden Linie nebeneinander angeordnet sind.

5. UV-Wasserbehandlungsanlage nach nach einem der vorhergehenden Ansprüche, **dadurch gekennzeichnet, dass** die Vorsprünge (3) gleich groß sind und dass die Fläche jeweils eines Vorsprungs (3) kleiner oder gleich der Fläche einer benachbarten Ausnehmung (4) ist.

6. UV-Wasserbehandlungsanlage nach einem der vorhergehenden Ansprüche, **dadurch gekennzeichnet, dass** die Vorsprünge (3) eine Dicke aufweisen, die gleich der Dicke des Grundkörpers (2) ist.

7. UV-Wasserbehandlungsanlage nach einem der vorhergehenden Ansprüche, **dadurch gekennzeichnet, dass** die Vorsprünge (3) jeweils durch Seitenkanten (8) und eine Stirnkante (9) begrenzt sind, wobei die Länge einer Seitenkante (8) zwischen 2 mm und 45 mm und die Länge der Stirnkante (9) zwischen 2 mm und 100 mm beträgt.

8. UV-Wasserbehandlungsanlage nach einem der vorhergehenden Ansprüche, **dadurch gekennzeichnet, dass** die wenigstens eine Mischvorrichtung (1) in Strömungsrichtung (11) gesehen stromaufwärts vor oder unmittelbar neben dem benachbarten UV-Strahlern (19, 20, 21, 22) angeordnet ist.

## Claims

1. UV water treatment plant with a channel (15) which is open at the top and a number of elongated and tubular UV radiators (19, 20, 21, 22) arranged in the channel (15), wherein the channel has two side walls (16) and a bottom wall (17), and wherein the UV radiators are aligned parallel to the side walls (16) and not parallel to the bottom wall (17), **characterised in that** at least one mixing device (1) with a plurality of projections (3) is mounted on a side wall parallel to a radiator (19, 20, 21, 22) in such a manner that the projections (3) during operation reach into the free cross section of the channel and that between in each case two projections (3) in each case viewed in the flow direction (11) a recess (4) is provided, which constitutes a free cross section, which can be flowed through.

2. UV water treatment plant according to Claim 1, **characterised in that** the plurality of projections (3) emanate from a base body (2) of the at least one mixing device (1), and the plurality of projections (3) point away from the bottom face (6) and extend beyond a plane formed by the top face (5).

3. UV water treatment plant according to Claim 1 or 2, **characterised in that** the area ratio of the areas effective in the flow direction (11) between the projections (3) and the recesses (4) is less than or equal to 1.

4. UV water treatment plant according to any one of the preceding claims, **characterised in that** the projections (3) and he recesses (4) are arranged in a straight line next to each other.

5. UV water treatment plant according to any one of the preceding claims, **characterised in that** the projections (3) are the same size and that the area in each case of a projection (3) is less than or equal to the area of an adjacent recess (4).

6. UV water treatment plant according to any one of the preceding claims, **characterised in that** the projections (3) have a thickness, which is equal to the thickness of the base body (2).

7. UV water treatment plant according to any one of the preceding claims, **characterised in that** the projections (3) in each case are bounded by side edges (8) and an end edge (9), wherein the length of a side edge (8) is between 2 mm and 45 mm and the length of the end edge (9) is between 2 mm and 100 mm.

8. UV water treatment plant according to any one of the preceding claims, **characterised in that** the at least one mixing device (1) viewed in the flow direction (11) is arranged upstream of or immediately next to the adjacent UV radiator (19, 20, 21, 22).

## Revendications

1. Installation de traitement de l'eau par UV avec un canal ouvert (15) au-dessus et un nombre d'émetteurs UV tubulaires allongés (19, 20, 21, 22) agencés dans le canal (15), auquel cas le canal présente deux parois latérales (16) et une paroi de fond (17), et auquel cas les émetteurs UV (16) sont orientés de sorte à être parallèles aux parois latérales (16) et pas parallèles à la paroi de fond (17), **caractérisée en ce qu'**au moins un dispositif de mélange (1) doté d'une multitude de saillies (3) est fixé sur une paroi latérale parallèlement par rapport à un émetteur (19, 20, 21, 22) de telle sorte que les saillies (3) pénètrent en fonctionnement dans la section transversale libre du canal et que l'on prévoit un évidement (4) entre respectivement deux saillies (3), respectivement vu en direction d'écoulement (11), qui affiche une section transversale pouvant être traversée librement.

2. Installation de traitement de l'eau par UV selon la revendication 1, **caractérisée en ce que** la multitude de saillies (3) émanent d'un corps de base (2) d'au moins un dispositif de mélange (1), et la multitude de saillies (3) s'éloignent du dessous (6) et s'étendent au-delà d'un plan formé par la face supérieure (5).

3. Installation de traitement de l'eau par UV selon la revendication 1 ou 2, **caractérisée en ce que** le rapport de surface des surfaces agissant en direction d'écoulement (11) entre les saillies (3) et les évidements (4) est inférieur ou égale à 1.

4. Installation de traitement de l'eau par UV selon une des revendications précédentes, **caractérisée en ce que** les saillies (3) et les évidements (4) sont agencés juxtaposés en ligne droite.

5. Installation de traitement de l'eau par UV selon une des revendications précédentes, **caractérisée en ce que** les saillies (3) ont la même taille et que la surface de respectivement une saillie (3) est inférieure ou identique à la surface de l'évidement (4) adjacent.

6. Installation de traitement de l'eau par UV selon une des revendications précédentes, **caractérisée en ce que** les saillies (3) présentent une épaisseur qui est identique à l'épaisseur du corps de base (2).

7. Installation de traitement de l'eau par UV selon une des revendications précédentes, **caractérisée en ce que** les saillies (3) sont respectivement délimitées par des bords latéraux (8) et un bord frontal (9), auquel cas la longueur d'un bord latéral (8) se situe entre 2 mm et 45 mm et la longueur du bord frontal (9) entre 2 mm et 100 mm.

8. Installation de traitement de l'eau par UV selon une des revendications précédentes, **caractérisée en ce qu'**au moins un dispositif de mélange (1) est agencé, vu en direction d'écoulement (11), en amont de l'écoulement avant ou directement à côté de l'émetteur UV (19, 20, 21, 22) adjacent.
